# EUROPEAN PATENT APPLICATION

(11) **EP 2 015 241 A1**
(43) Date of publication of application: **14.01.2009**
(21) Application number: 07013154.5
(22) Date of filing: 05.07.2007
(51) Int. Cl.: G06Q 20/00

(54) **i-duit - virtual wallet for easy interactive payments**

(71) Applicant: Domain Technologies Ltd, Bank Lane Roehampton London SW 15 5 JT (GB)
(72) Inventor: Manzuror, Rahman Jami, London W10 Gay (GB)

(57) **Abstract**

A payment method that uses the account of the mobile service provider (MSP) besides a financial account for money transfer in a way that the MSP guards the amount to be transferred and the I-Duit solution handles the interface between Users and mobile service providers.

## Description

### FIELD OF INVENTION

The present invention relates to a payment method that transfers financial value based on telephone communication from one account to another, using money or monetary value already represented by the status of their telephone account.

### BACKGROUND OF INVENTION

The conventional telephone payment-systems are based on proprietary servers that allow clients of the system to transfer financial values via this server between accounts that arc opened in this server. The disadvantages are :
- Comprehensive security procedures are to be followed
- Registration procedures have to he accomplished
- All methods require membership in this proprietary system
- Transactions are restricted to this proprietary system
- The system accounts have to be loaded with financial value prior to usage, i.e. money has to be deposited with the system vendors

### PRINCIPLE CONCEPT OF INVENTION

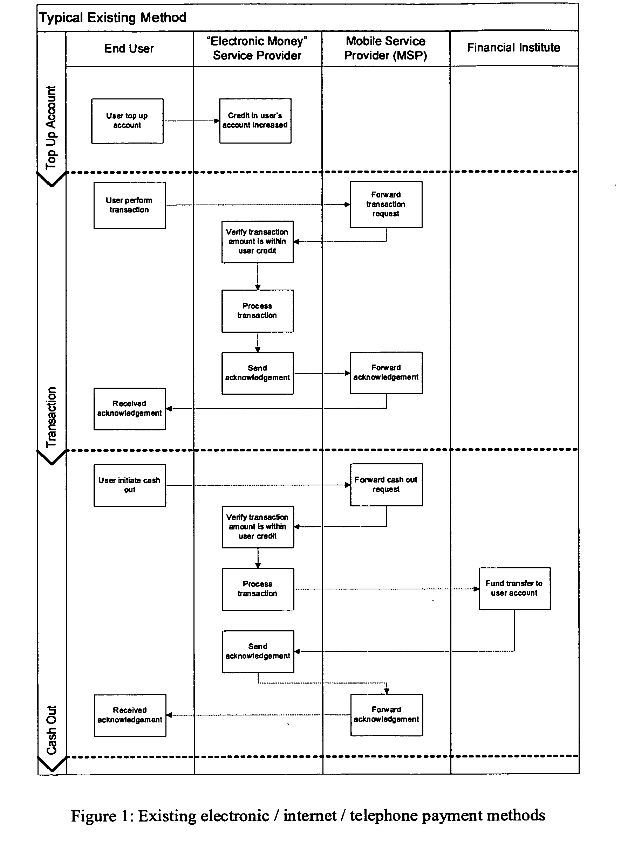

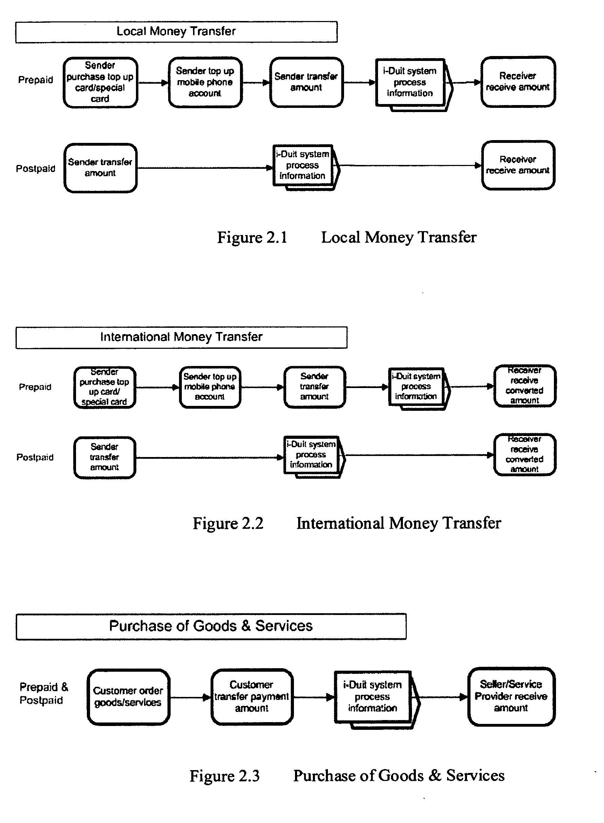

Figure 2.1 to Figure 2.5 show the diagrams which represent the principal idea of this invention which caters for the convenience of making money transfer and payments via the mobile

### Figure 2.1 Local Money Transfer

For any local money transfer, the sender initiates the transfer process for credit limit or monetary value to be moved from his/her own mobile phone to the receiver's mobile phone. For prepaid mobile users, he/she will need to purchase a top up card or a special card to top up the account before starting the transfer. On the other hand, postpaid mobile users can instantaneously initiate the transfer provided there is sufficient credit limit in his/her mobile account. Local money transfer does not involve any currency conversion process as money will be dealt in local currency.

### Figure 2.2 International Money Transfer

Similar to local money transfer, the initiation point comes from the sender who wants to transfer money to another mobile user in another currency or uses a cross country mobile phone. The main difference here is that currency conversion process is involved if the sender chooses to convert the money from local currency to the foreign currency when it reaches the receiver.

### Figure 2.3 Purchase of Goods & Services

Mobile users can purchase any kind of goods and services from sellers or service providers, locally (face-to-face) or remotely (online/Internet) with the presence of one or both parties. Upon ordering the goods and services, mobile user who is the customer will make payment via i-Duit to the seller or servile provider.

Below are some examples of goods and services categories:

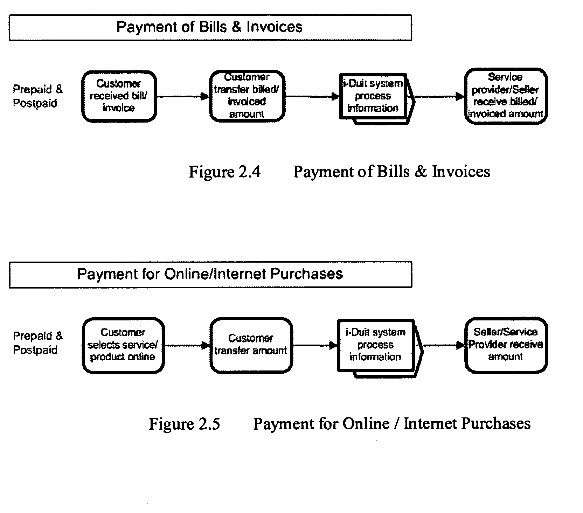

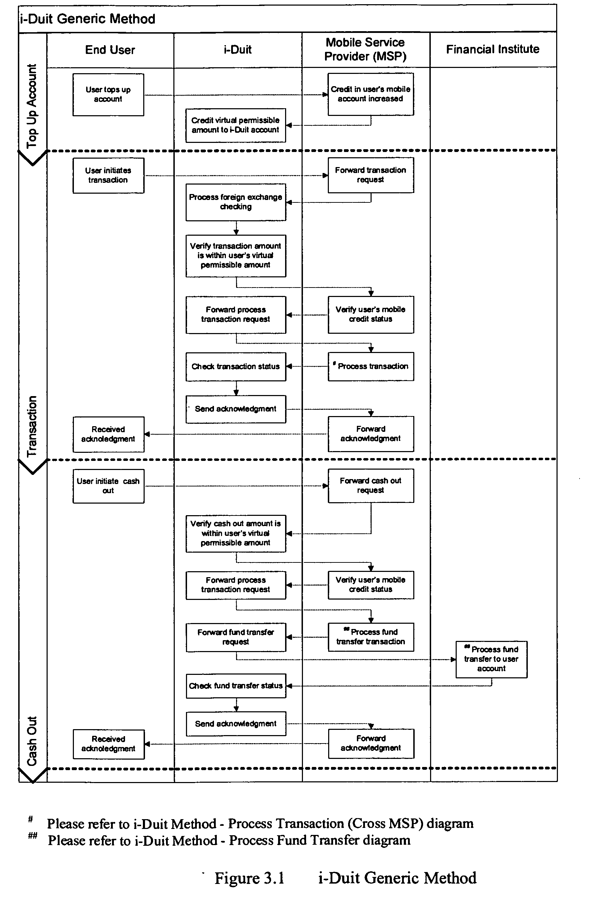

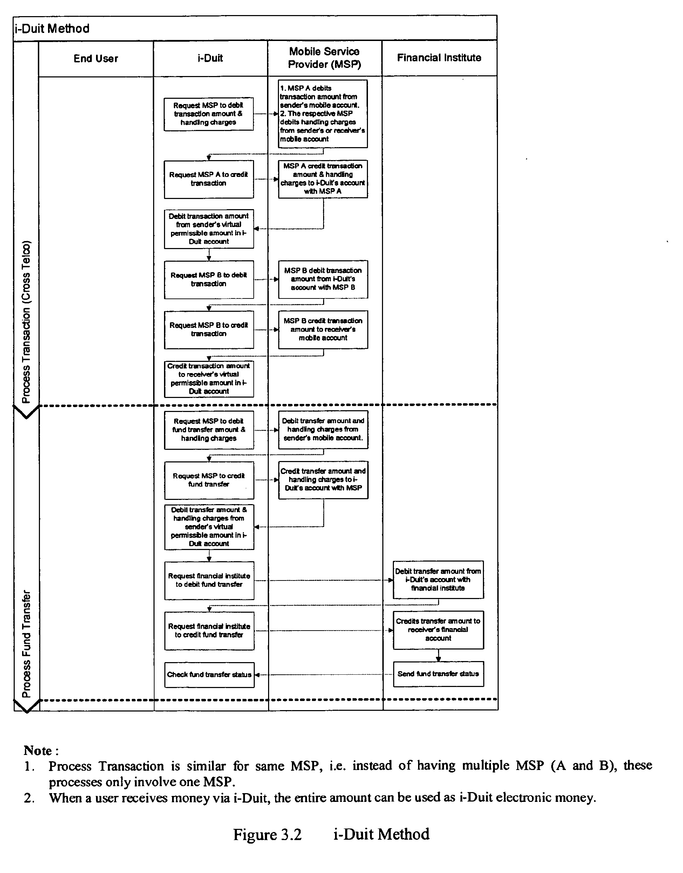

### Figure 2.4 Payment or Bills & Invoices

Payments for any type of bills and invoices for purchased goods or services (locally or remotely) can be made via i-Duit. Upon receiving any bill or invoice, mobile user who is the customer will make payment via i-Duit to the seller or service provider.

### Figure 2.5 Payment for Online / Internet Purchases

Any purchase made online or through the Internet (remote purchase) can be paid through i-Duit. After selecting the service or product online or on the Internet, mobile user who is the customer can use i-Duit as a payment mode to transfer money to the seller or service provider.

### SUMMARY OF THE INVENTION

The present new payment method and process, uses the Mobile Service Provider's (MSP), post-paid or prepaid-card, accounting system to transfer monetary value from one user to the other. The transfer can be between accounts within the same mobile service provider or between accounts held with different mobile service providers. The i-Duit solution includes the option to limit the transfer amount by its respective mobile service provider.
The SIM card or the telephone number identifies the i-Duit account but there is also an i-Duit account identification number for users who do not wish to divulge their telephone number during transactions, The advantages are:
- Users do not have to deposit money with a separate vendor or system, rather their monetary dealings with the mobile service provider covers both telephone usage and i-Duit usage
- Registration is obsolete
- Users have the choice of maintaining anonymity both for receiving payments and for verifying source of payments by using i-Duit account identification number and transaction key
- Activation can happen anytime
- Payments and refunds become easier
- No restrictions by proprietary insularity
- Instant conversion to cash (cash out at any point)
- Fund transfer to financial institute

Overall, the method and the derived processes arc more user-friendly and attracts user to frequently use the process especially for small and medium payments as they regularly arc made by cash.

### CASH CONVERSION RATIO

Cash conversion ratio is a method to calculate the virtual permissible amount that can be used by the user to be spent in i-Duit. Please refer to examples below for *prepaid* and *postpaid* accounts:

### Prepaid accounts

Out of 100% top up value, the user is only allowed a certain percentage of the value (e.g. 70%) to be spent on online transactions through i-Duit.
User's top up values = ∈ 100
Virtual permissible amount in i-Duit account - 70% of ∈100 = ∈70
Mobile credit amount (air time) = ∈100

This means that user can use up to ∈70 to purchase goods/services via i-Duit or ∈100 worth of airtime for phone calls. Let's say if the user initiates a transaction worth of ∈40, i-Duit will check whether the virtual permissible amount is sufficient for this transaction. Then, i-Duit will request MSP to check whether there is enough mobile credit for the transaction (air time value). If both values are sufficient, then this transaction will be processed and below shall be the balance:
Virtual permissible amount in i-Duit account = ∈70 ∈40 = ∈30
*Virtual permissible amount in i-Duit account ∈30-(1% of ∈40) = ∈29.60
Mobile credit amount = ∈100 - ∈40 = ∈60
*Mobile credit amount = ∈60 - (1% of ∈40) ∈59.60
**Mobile credit amount after deduction is sufficient (∈ 60 ≥ ∈10)

* If handling charges is applied to sender, and for example, handling charges is 1% of transaction amount
** If minimum balance after transaction is required by MSP and for example, ∈10

Hence, this user only has the remaining of ∈29.60 for future i-Duit transactions or ∈59.60 worth of mobile credit. When the user uses the mobile credit to make phone calls, let's say worth of ∈35.50 airtime, the new balance will be:
Virtual permissible amount in i-Duit account = ∈29,60
Mobile credit amount - ∈59.60 - ∈35.50 - ∈24.10

The user still has a maximum of ∈29.60 to be used for i-Duit transactions provided that the mobile credit is sufficient for the transaction. For example, the user attempts to make a transaction worth of ∈25 via i-Duit. Although the virtual permissible amount is enough for the transaction, however, as the mobile credit is insufficient, therefore the transaction is not allowed. In order to make this transaction, the required balance should be:
Virtual permissible amount in i-Duit account ∈25 + *(1% of ∈25) = ∈25.25
Mobile credit amount = ∈25 + *(1% of ∈25) + **(∈10) = ∈35.25

* If handling charges is applied to sender, and for example, handling charges is 1% of transaction amount
** If minimum balance after transaction is required by MSP and for example, ∈10

Therefore, user tops up the mobile credit by ∈50. The new balance for this mobile account will be:
Virtual permissible amount in i-Duit account ∈29.60 + (70% of ∈50) ∈64.60
Mobile credit amount -∈24.10 + ∈50 = ∈74.10

With the new mobile credit and virtual permissible amount, the user can now make i-Duit transactions up to a maximum of ∈64.60.

### Postpaid accounts

For a new postpaid account, let's say the credit limit allowed is ∈500. Initially, this postpaid user uses ∈150 for phone calls. Following that, the user activates i-Duit to utilize the facilities. Upon activation, out of 100% of the current credit limit value, the user is only allowed a certain percentage of the value (e.g. 20%) to be spent on online transactions through i-Duit.
Current mobile credit limit value (air time) = ∈350
Victual permissible amount in i-Duit account = 20% of ∈350 = ∈70
Billing amount = ∈ 150

This means that user can use up to ∈70 to purchase goods/services via i-Duit or ∈350 worth of airtime for phone calls. When the user initiates a transaction worth of ∈50, i-Duit will check whether the virtual permissible amount is sufficient for this transaction. Then, i-Duit will request MSP to check whether there is enough mobile credit for the transaction (air time value). If both values are sufficient, then this transaction will be processed and below shall be the balance:
Virtual permissible amount in i-Duit account ∈70 - ∈50 ∈20
*Virtual permissible amount in i-Duit account ∈20 (1% of ∈50) = ∈19.50
Mobile credit limit = ∈350 - ∈50 ∈300
*Mobile credit limit = ∈300 - (1% of ∈50) ∈299,50
**Mobile credit amount after deduction is sufficient (∈ 299.50 ≥∈10)
Billing amount - ∈(150 + 50 + 0.50) = ∈200.50

* If handling charges is applied to sender, and for example, handling charges is 1% of transaction amount
** If minimum balance after transaction is required by MSP and for example, ∈10

Hence, this user only has the remaining of ∈19.50 for future i-Duit transactions or ∈299.50 worth of credit limit. When the user makes phone calls, let's say worth of ∈100.00 airtime, the new balance will be:
Virtual permissible (amount in i-Duit account - ∈19.50
Mobile credit limit = ∈299.50 - ∈100.00 ∈199.50
Billing amount = ∈(200.50 + 100) = ∈300.50

The user still has a maximum of ∈19.50 for i-Duit transactions provided that the mobile credit is sufficient for the transaction. For example, the user attempts to make a transaction worth of ∈25 via i-Duit. Although the credit limit is enough for the transaction, however, as the virtual permissible amount is insufficient, therefore the transaction is not allowed. In order to make this transaction, the required balance should be:
Virtual permissible amount in i-Duit account - ∈25 + *(1% of ∈25) = ∈25.25
Mobile credit amount = ∈25 + *(1% of ∈25) + **(∈10) - ∈ 35.25

* If handling charges is applied to sender, and for example, handling charges is 1% of transaction amount
** If minimum balance after transaction is required by MSP and for example, ∈10

The current billing amount on user's monthly bill is ∈300.50. Therefore, when user makes a payment of ∈100 at the end of the month, the virtual permissible amount and credit limit will he recalculated. The new balance for this mobile account will be:
Virtual permissible amount in i-Duit account - ∈19.50 +(20% of ∈100) - ∈39.50
Mobile credit limit = ∈199.50 + ∈100 = ∈299.50
Balance in billing amount = ∈ (300.50 -100) = ∈ 200.50
Note: There might be penalty for late bill payment but this amount is omitted in this example for simplicity reason

With the new mobile credit limit and virtual permissible amount, the user can now make i-Duit transactions up to a maximum of ∈39.50. If the user decided to settle the full payment on the bill i.e. ∈ 200.50, the new balance for this mobile account will be:
Virtual permissible amount in i-Duit account = ∈39.50 + (20% of ∈200.50) - ∈79.60
Mobile credit limit = ∈299.50 + ∈200.50 = ∈500
Balance in billing amount - ∈ (200.50 - 200.50) - ∈ 0.00

In situation where the user pays additional amount to the MSP, the maximum credit limit and virtual permissible amount remains at ∈500 and ∈100 respectively. For example, if the user pays another ∈200, the calculation is shown below;
Virtual permissible amount to be topped up = 20% of ∈200 **= ∈**40
Virtual permissible amount which exceeds maximum allowed (i.e. ∈100) - ∈ (79.60 + 40) = ∈119.60
Mobile credit limit which exceeds maximum allowed (i.e. ∈500) ∈(500 +200)= ∈700

For this scenario, the balance still remains as follows:
Virtual permissible amount in i-Duit account ∈100
Mobile credit limit ∈500
*Balance in billing amount = (∈200)
* Amount owes by MSP to user

The purpose of introducing the cash conversion ratio is to ensure that the maximum amount to be spent via i-Duit will be less than the actual amount collected by the MSI' that implements this method for prepaid account. As for postpaid accounts, it acts as a control mechanism to minimize the risks involved in i-Duit usage. By using this method, the historical expenditure via i-Duit could easily be tracked.

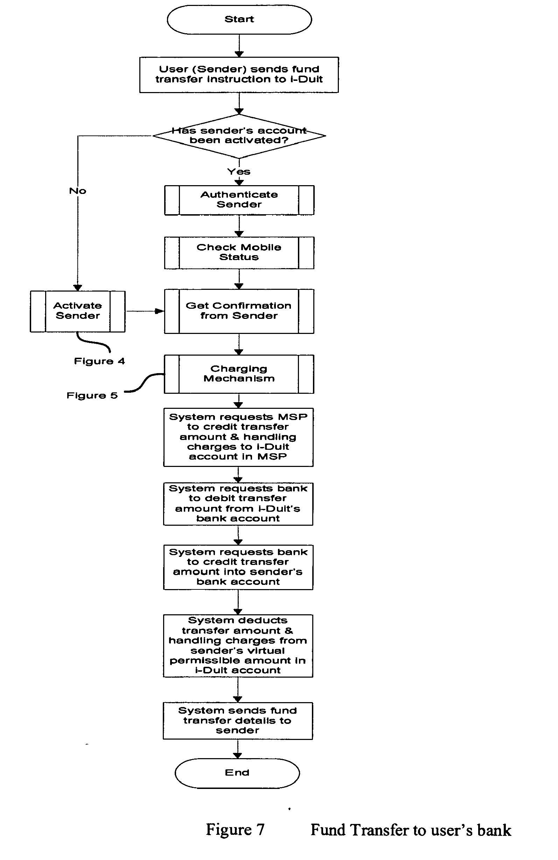

### Figure 7 Fund Transfer to user's bank

### BRIEF DESCRIPTION OF THE DRAWINGS

### Figure 4

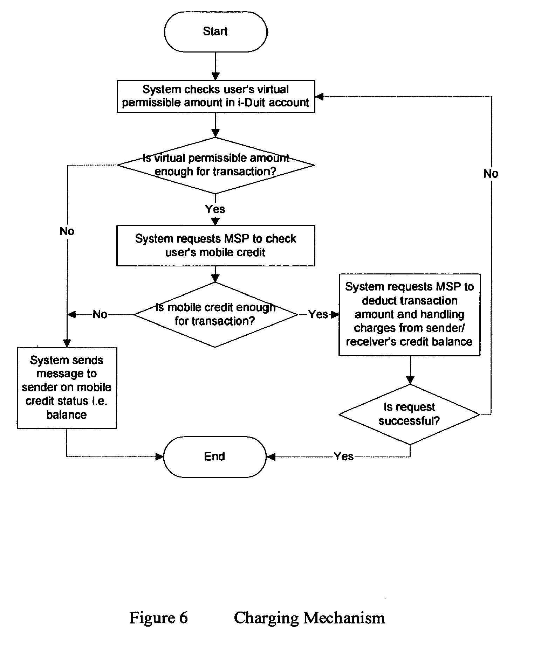

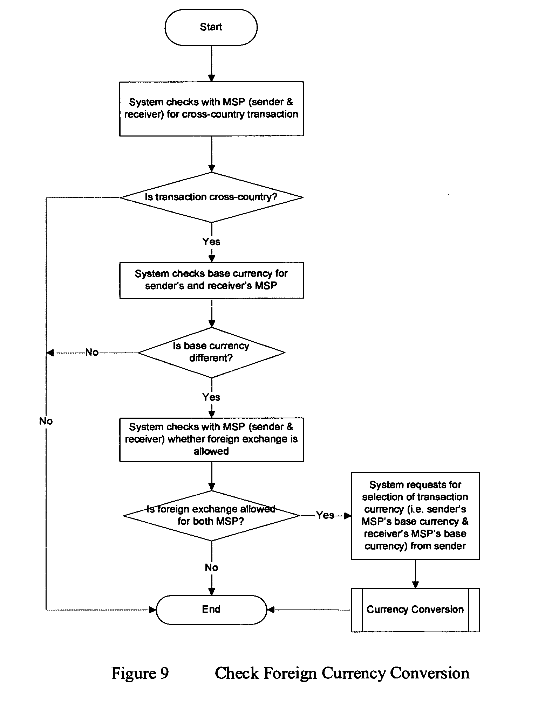

This figure shows the transaction process when a mobile user (sender) initiates a payment to another mobile user (receiver). The receiver can choose to give his/her mobile number or i-Duit account identification number to the sender for the transaction. Firstly, system will check whether sender's i-Duit account has been activated. If his/her account has yet been activated, system will prompt the sender for account activation. Otherwise, sender will be authenticated by his/her pin number (preset during account activation). If sender fails to provide the correct pin number for a pre-defined number of attempts, the account will automatically be locked for security reason.
Upon successful authentication, the mobile status will be checked and system will request for a confirmation from sender before proceeding. When sender confirms, the checking of foreign currency and conversion will be carried out. Please refer to Figure 9 for further details. Then, the charging mechanism will be executed as shown in Figure 6. After the completion of the above processes, system will check whether the receiver's account has been activated before. System will prompt the receiver for account activation if it has yet been activated. Otherwise, system will directly initialize a new session with receiver, requesting for payment acceptance by sending him/her the transaction key. This transaction key will help the receiver to verify whose payment is currently being accepted (to cater for multiple senders sending payment to one receiver at the same time). When receiver accepts the payment, there is an optional step where a confirmation message will be sent to the sender for second confirmation. Upon receiving a confirmation from sender, system will request MSP to process the transaction accordingly and send a confirmation message to both the sender and receiver. Otherwise, system will notify the sender that receiver has rejected the payment.

### Figure 5

This figure shows the activate user (sender/receiver) process when a user accesses i-Duit or i-Duit approaches a user and the account has yet been activated. Firstly, the user's identity will be verified by requesting him/her to provide the answers for some security questions (e.g. identity card no.). Upon successful user identity verification, user will be requested to provide a new pin number (numeric) and confirmation on the new pin number. Otherwise, the account will be locked for security reasons. Following that, user will be asked whether to set up the bank account information (optional). If the user chooses to setup the bank account, system will verify the bank information with the respective bank and save the information. Following that, system will activate the account and user can then continue with the requested transaction.

### Figure 6

This figure shows the charging mechanism for any transaction process. Upon sender confirmation on transaction process, system will check whether sender's virtual permissible amount in i-Duit account is sufficient for this transaction, If the amount is insufficient, system will send a message to the sender on his/her mobile credit status (i.e. balance available for transaction). Otherwise, system will then request MSP to check whether sender's mobile credit is sufficient for this transaction. In case of insufficient credit, a similar message will be sent to the sender on his/her mobile credit status. If both are sufficient for the transaction, system will request MSP to debit the transaction amount from sender's mobile account and debit the handling charges from either sender or receiver's mobile credit balance.

### Figure 7

This figure shows the fund transfer process to a financial institute when a user (sender) initiates a fund transfer to a bank account. Firstly, system will check whether sender's i-Duit account has been activated. If account has yet been activated, system will prompt sender for account activation. Otherwise, sender will be authenticated by his/her pin number (preset during account activation). If sender fails to provide the correct pin number for a pre-defined number of attempts, the account will automatically be locked for security reason.
Upon successful authentication, the mobile status will be checked and system will request for a confirmation from sender before proceeding. When the sender confirms, system will request MSP to debit the fund transfer amount as well as the handling charges from the sender's mobile account and credit the transfer amount into i-Duit's mobile account with MSP. Following that, system will request the respective bank to debit the transfer amount from i-Duit's bank account and credit it into the sender's bank account. When all processes completed successfully, system will deduct the transferred amount from sender's virtual permissible amount in i-Duit account. Finally, a notification message will be sent to the sender on the fund transfer details.

### Figure 8

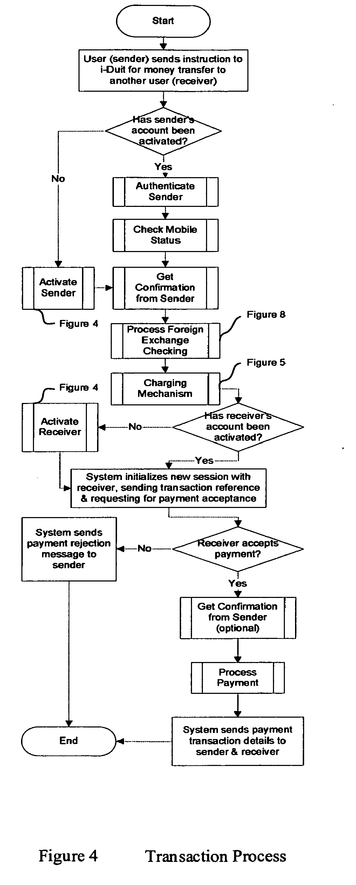

This figure shows the simplified version of the processes involved when a user (sender) initiates a transaction with a user (receiver) from another MSP. The processes for exchanges between users (cross MSP) are the same as the transaction processes shown in Figure 4. The differences are the charging mechanism and payment process, where the debit and credit processes are further explained in details here for cross MSP transaction.
When the receiver accepts the payment, system will request MSP A to debit the transaction amount from sender's account and either MSP A or B to debit handling charges from sender or receiver's mobile account respectively. MSP A will then be requested to credit the transaction amount to i-Duit's mobile account with MSP A. Upon successful updates, the system will deduct this amount from sender's virtual permissible amount in i-Duit account. Following that, system will request MSP 13 to debit the transaction amount from i-Duit's mobile account with MSP B and credit it to the receiver's account. Finally, system will add this amount to the receiver's virtual permissible amount in i-Duit account. Other processes are similar as shown in Figure 4.

### Figure 9

This figure shows the foreign currency conversion checking when a sender initiates a transaction. Firstly, system will check wether the transaction between sender and receiver is a cross-country transaction. In case where no cross-country transaction is involved, the rest of the checkings will not be necessary. If cross-country transaction is detected, the system will check whether the base currency for both MSP is the same. In case of different base currency, system will check whether foreign exchange is allowed by sender's MSP as well as receiver's MSP. If both MSP allow foreign exchange for transaction, system will request the sender to select from two choices of currency i.e. sender's MSP's base currency & receiver's MSP's base currency. Upon selecting a currency, the system will perform currency conversion before the charging mechanism takes place. Otherwise, if no foreign exchange is involved, then the charging mechanism will directly be executed using the sender's MSI"s base currency.

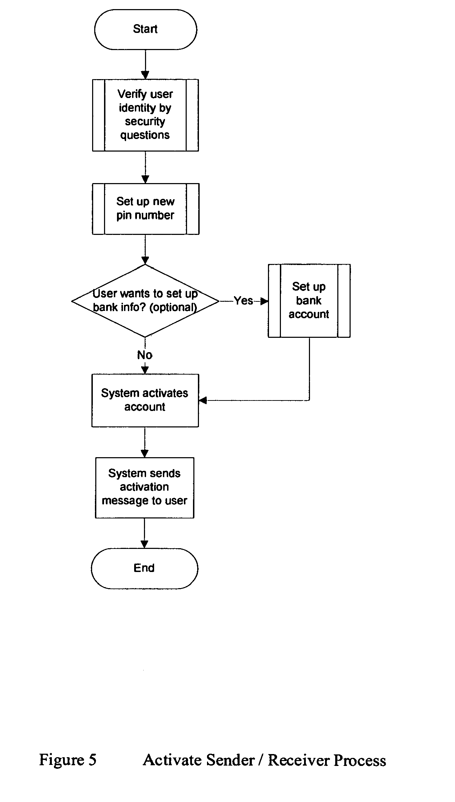

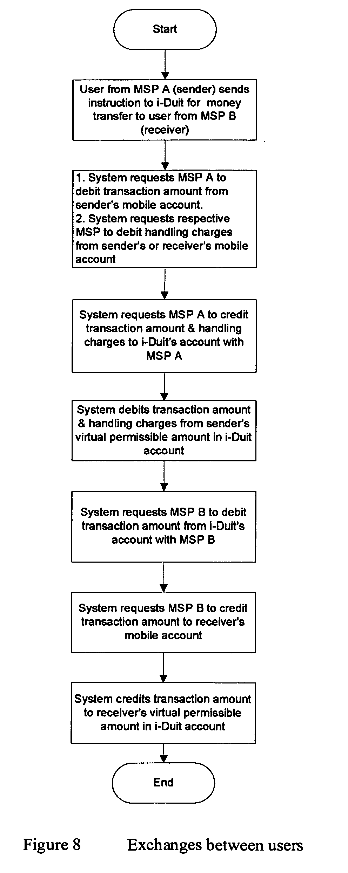

In describing the preferred embodiments of the present invention as shown in Figures 4 to 9 specific terminologies shall be used for the sake of clarity in the description.
However, it is to be noted that the present invention is not intended to be limited to the specific terminologies so selected and it is to bc understood that each specific terminology shall include all technical equivalents operating in a similar fashion to accomplish a similar objective/purpose.

## Claims

1. A method that simplifies and eases the processing of the existing proprietary telephone based money transfer methods by using the account of the mobile service provider besides a financial account for money transfer.

2. A method as claimed in 1, whereby the mobile service provider allows or rejects a required transfer dependent on the credibility status of the User that requires the transfer.

3. A method as claimed in 1, whereby the management of the interface between the Users and the mobile service providers is handled by the I-Duit solution.

4. A method as claimed in 3, whereby the I-Duit solution verifies whether the mobile service provider's account of either User A or User B (receiver) covers the transaction fees and allows or denies the transaction from User A to User B dependent on the result of the verification.

5. A method as claimed in 3 where a telephone user can transfer call-units or monetary value from his mobile service provider's account to the mobile service provider's account of another telephone user by using the i-Duit system to manage the transfer.

6. A method as claimed in 5, whereby the call-units or monetary value can be transferred between
- user accounts of same or different mobile service providers,
- user accounts of mobile service providers of different countries
- and amongst mobile service providers

7. A method as claimed in Claim 1 to 6, whereby the management of the interface between all parties, as there is different mobile service providers within each country or mobile service providers of different countries, is handled and managed by the I-Duit solution.

8. A method as claimed in Claim 1 to 6, whereby (monetary) value can be transferred between the user accounts of the mobile service providers and the user's bank account.

9. A method as claimed in Claim 1 to 6, whereby the registration process is substituted by an activation process, that specifies an identifier / pin only

10. A method as claimed in Claim 1 to 6, whereby the particulars of the user that are known to the mobile service provider are used to identify the account.

11. A method as claimed in Claim 1 to 6, whereby an account identification other than the telephone number can be setup in addition to the telephone number or to replace the telephone number

12. A method as claimed in Claim 1 to 6, whereby the transaction is identified by a transaction key to identify the transaction

13. A method as claimed in Claim 12, whereby a unique transaction key is automatically generated.
